Europäisches Patentamt

European Patent Office

Office européen des brevets

(19)

(11) Veröffentlichungsnummer: **0 104 159**
**B1**

(12) # EUROPÄISCHE PATENTSCHRIFT

(45) Veröffentlichungstag der Patentschrift:
04.11.87

(51) Int. Cl.⁴: **F 16 C 33/04**

(21) Anmeldenummer: **83890142.9**

(22) Anmeldetag: **02.09.83**

(54) Hydrodynamisches Gleitlager.

(30) Priorität: **20.09.82 AT 3490/82**

(43) Veröffentlichungstag der Anmeldung:
**28.03.84 Patentblatt 84/13**

(45) Bekanntmachung des Hinweises auf die Patenterteilung:
**04.11.87 Patentblatt 87/45**

(84) Benannte Vertragsstaaten:
**DE FR GB IT**

(56) Entgegenhaltungen:
**AT-B-219 911**
**DE-A-2 036 036**
**DE-A-2 251 637**
**GB-A-1 126 771**
**US-A-3 497 272**

(73) Patentinhaber: **Miba Gleitlager Aktiengesellschaft,
Hauptstrasse 3, A-4663 Laakirchen (AT)**

(72) Erfinder: **Ehrentraut, Otto, Sudetenplatz 1, A-4810
Gmunden (AT)**
Erfinder: **Ederer, Ulf, Dipl.- Ing., Am Wiesenhof 20,
A-4813 Altmünster (AT)**

(74) Vertreter: **Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)**

EP 0 104 159 B1

## Beschreibung

Die Erfindung bezieht sich auf ein hydrodynamisches Gleitlager, bestehend aus einer einen bewegten Teil aufnehmenden Lauffläche mit über die Laufflächenbreite verteilten, nutenartigen Ausnehmungen, die gegenüber der Laufrichtung höchstens unter einem Winkel von 20° geneigt sind.

Um die Reibungsverhältnisse unter gleichzeitiger Erhöhung der Verschleißfestigkeit bei hydrodynamischen Gleitlagern zu verbessern, wurde bereits vorgeschlagen (DE-A-2 251 637), die Lauffläche nicht als durchgehende Schicht eines einzigen Lagerwerkstoffes auszubilden, sondern in eine Schicht eines härteren Lagermetalls einen weicheren Lagerwerkstoff einzubetten, so daß sich in Laufrichtung abwechselnd Zonen eines härteren und eines weicheren Lagerwerkstoffes ergeben. Dabei wurde von der Vorstellung ausgegangen, daß das härtere Lagermetall gewissermaßen ein tragendes Gerüst bildet, das eine übermäßige Übertragung des weicheren Lagerwerkstoffes auf die Reibungsflächen verhindert, wobei die vorragenden Stege des tragenden Gerüstes wegen ihres Verlaufes quer zur Laufrichtung mit dem weicheren Lagerwerkstoff dünnschichtig überzogen werden können. Gleitlager dieser Art können die in sie gesetzten Erwartungen jedoch nicht erfüllen, weil die Verreibungsgefahr nicht wesentlich herabgesetzt wird.

Zur Verbesserung dieser Gleitlager ist es bekannt (AT-B-369 145), den weicheren Lagerwerkstoff in nutenartige Ausnehmungen des härteren Lagerwerkstoffes unter der Bedingung einzubetten, daß der Winkel zwischen den nutenartigen Ausnehmungen und der Laufrichtung kleiner als 15° ist und daß der Abstand der Ausnehmungen voneinander ein bestimmtes Maß nicht übersteigt, so daß sich eine feine Verteilung des weicheren Lagerwerkstoffes über die Laufflächenbreite ergibt. Überraschenderweise konnten Gleitlager mit diesen Merkmalen allen Anforderungen entsprechen, weil einerseits durch die feine Verteilung des weicheren Lagerwerkstoffes auch im örtlichen Bereich ein Kombinationseffekt zwischen dem härteren und dem weicheren Lagerwerkstoff gewährleistet wird und nicht nur die Eigenschaft eines der beiden Werkstoffe wirksam werden kann und weil anderseits durch den Verlauf der Ausnehmungen im wesentlichen in Laufrichtung Fremdkörper im weicheren Werkstoff eingelagert bleiben und nicht in den härteren Lagerwerkstoff eingedrückt werden, wo sie Störstellen mit der Gefahr örtlicher Überlastungen bilden könnten. Obwohl diese bekannten Gleitlager ihren Anforderungen in hervorragender Weise entsprechen, bedarfes wegen der Einbettung eines weicheren Lagerwerkstoffes in der Lagermetallschicht eines bestimmten Aufwandes.

Schließlich ist es bekannt (AT-B-219 911), in der Lauffläche eines Gleitlagers wenigstens annähernd parallel zur Bewegungsrichtung verlaufende, rillenförmige Ausnehmungen vorzusehen. Die Breite der zwischen den Ausnehmungen verbleibenden Stege ist dabei begrenzt und beträgt bei einem Lagerdurchmesser von 50 mm vorzugsweise 0,8 bis 2 mm, um über diese Ausnehmungen den Stegen ausreichend Schmierstoff zur Ausbildung eines zusammenhängenden Schmierfilmes zuführen zu können. Die Unterteilung der Lauffläche durch die Ausnehmungen soll aber auch eine einfachere Anpassung der Lauffläche an Deformationen ermöglichen, so daß die durch die Ausnehmungen wegfallende Lagerfläche zum Teil durch den größeren Tragflächenanteil ausgeglichen wird. Diese bekannten Gleitlager sind insbesondere für den Einsatz von Dauerschmierstoffen in den Ausnehmungen gedacht und zur Aufnahme größerer Belastungen ungeeinget, weil aufgrund des gewählten Abstandes der Ausnehmungen voneinander und des verbleibenden Tragflächenanteiles, der das Zwei- bis Fünffache der Ausnehmungsfläche ausmacht, die Ausbildung eines über die Lagerbreite durchgehenden Schmierfilmes erheblich gestört wird und die Gefahr besteht, daß es zufolge der angestrebten Anpassung an Deformationen zu örtlichen Überlastungen kommt. Diese Gefahr steigt mit den für höhere Belastungen notwendigen größeren Lagerdurchmessern, da nicht nur die angegebene Stegbreite, sondern auch das Verhältnis der verbleibenden Tragfläche zur Ausnehmungsfläche sich proportional mit dem Lagerdurchmesser ändert.

Der Erfindung liegt somit die Aufgabe zugrunde, ein hydrodynamisches Gleitlager zu schaffen, das ohne Einbettung eines weicheren Lagerwerkstoffes in die Lagermetallschicht auskommt und Reibungsverhältnisse schafft, wie sie sonst nur durch Lager mit solchen Einbettungen erreicht werden.

Ausgehend von einem hydrodynamischen Gleitlager der eingangs geschilderten Art löst die Erfindung die gestellte Aufgabe dadurch, daß die Ausnehmungen bei einem den Aufbau eines hydrodynamischen Mindestdruckes in den sich mit dem bewegten Teil ergebenen Kanälen für das Schmiermittel ermöglichenden Querschnitt einen von Ausnehmungsmitte zu Ausnehmungsmitte gemessenen Axialabstand a voneinander aufweisen, der bis zu einem Höchstwert von 10 mm kleiner oder gleich einem oberen Grenzwert

$$a_o = 200 + 0,5d + 0,006d^2$$

ist, welcher sich beim Einsetzen des jeweiligen in Millimeter gemessenen Lagerdurchmessers d in Mikrometer ergibt, und daß das Verhältnis der Stegbreite zwischen zwei Ausnehmungen und dem Axialabstand zwischen den Ausnehmungen kleiner oder gleich einem oberen Grenzwert

$$(a - b)/a = 100 - 6v_u^{0,6} \ [\%]$$

ist, wobei b die Breite der Ausnehmungen und $v_u$ der in m.s$^{-1}$ gemessene Zahlenwert der Umfangsgeschwindigkeit des bewegten Lagerteiles ist.

Obowhl die nutenartigen Ausnehmungen in der Lauffläche die Ausbildung eines gleichmäßigen Schmierfilmes und damit die hydrodynamische Tragfähigkeit des Gleitlagers beeinträchtigen, werden verbesserte Reibungsverhältnisse erzielt, weil die nutenartigen Ausnehmungen größere Durchtrittsquerschnitte für das Schmiermittel bilden und die erhöhte Schmiermittelströmung im Bereich des engsten Schmierspaltes eine verbesserte Wärmeabfuhr mit sich bringt. Der Nachteil der verringerten hydrodynamischen Tragfähigkeit des Schmierfilmes wird durch die verbesserte Abfuhr der entstehenden Reibungswärme mehr als wettgemacht, so daß tatsächlich ein hydrodynamisches Gleitlager mit unerwartet guten Reibungsverhältnissen erhalten wird. In diesem Zusammenhang ist zu bedenken, daß selbst bei auftretender Mischreibung die örtlich entstehende Wärme zumindest großteils über das durch die Ausnehmungen in der Lauffläche geförderte Schmiermittel abgeführt werden kann, so daß die Schmiermitteltemperatur im Bereich der Mischreibung vergleichsweise niedrig und folglich die Viskosität des Schmiermittels hoch bleibt, was der Tragfähigkeit der Schmiermittelschicht zugute kommt. Voraussetzung für diese vorteilhafte Wirkung ist allerdings, daß durch eine möglichst feine Verteilung der nutenartigen Ausnehmungen über die Laufflächenbreite ein entsprechender Schmiermittelfluß zur Wärmeabfuhr in unmittelbarer Nähe möglicher Stellen größerer Reibung sichergestellt wird. Aus diesem Grunde wird der von Ausnehmungsmitte zu Ausnehmungsmitte gemessene Axialabstand der nutenartigen Ausnehmungen voneinander nach oben begrenzt.

Eine weitere Voraussetzung für das Erreichen der angestrebten Wirkung besteht darin, daß durch die sich zwischen den nutenartigen Ausnehmungen in der Läuffläche und dem darauf bewegten Lagerteil ergebenden Kanäle nicht der Aufbau eines hydrodynamischen Mindestdruckes verhindert wird. Die Querschnittsform und -größe der Ausnehmungen muß folglich in Abhängigkeit von den Eigenschaften des Schmiermittels, der Lagerbelastung und der Schmierspaltgeometrie so gewählt werden, daß sich zwischen der Lauffläche und dem von ihr aufgenommenen Lagerteil noch ein ausreichender hydrodynamischer Druck des Schmiermittels aufbauen kann. Dieser Forderung wird durch einen oberen Grenzwert für das Verhältnis der Stegbreite zwischen zwei benachbarten Ausnehmungen zum Axialabstand der Ausnehmungen Rechnung getragen, wobei mit zunehmender Umfangsgeschwindigkeit des bewegten Lagerteiles der Anteil der Stege an der Lauffläche kleiner wird.

Zur Verbesserung der möglichen Wärmeabfuhr kann der Axialabstand a der Ausnehmungen kleiner als ein oberer Grenzwert

$$a_0 = 150 + 0{,}3d + 0{,}001d^2$$

gewählt werden, der sich beim Einsetzen des in Millimeter gemessenen Lagerdurchmessers d in Mikrometer ergibt.

Unterschreitet der axiale Abstand zwischen zwei Ausnehmungen eine untere Grenze, so wird die Breite der nutenartigen Ausnehmungen und damit der mögliche Querschnitt der nutenartigen Ausnehmungen so verringert, daß die erreichbare Kühlwirkung stark nachläßt. Aus diesem Grunde soll der Axialabstand a der Ausnehmungen größer oder gleich einem unteren Grenzwert

$$a_u = 10 + 0{,}1d$$

sein, der sich in Mikrometer beim Einsetzen des in Millimeter gemessenen Lagerdurchmessers d ergibt. Werden diese Grenzen für den Axialabstand der Ausnehmungen eingehalten, so kann für eine die Verringerung der hydrodynamischen Tragfähigkeit bei weitem wettmachende Wärmeabfuhr gesorgt werden, was den Vorteil erfindungsgemäßer Lager gegenüber vergleichbaren Lagern mit einer durchgehend glatten Lauffläche ausmacht.

Damit einerseits eine ausreichende Schmiermittelförderung durch die nutenartigen Ausnehmungen in der Lauffläche und anderseits der Aufbau eines bestimmten hydrodynamischen Mindestdruckes für das Schmiermittel sichergestellt werden kann, sollte ein bestimmtes Verhältnis zwischen der Ausnehmungstiefe t und der Ausnehmungsbreite b nicht überschritten werden. Allen Anforderungen entsprechende Bedingungen können eingehalten werden, wenn das Verhältnis der Ausnehmungstiefe t zur Breite b der Ausnehmungen

$$t/b \leqslant (1500 - d)/1500$$

ist, wobei d dem in Millimeter gemessenen Zahlenwert des Lagerdurchmesser entspricht.

In der Zeichnung ist der Erfindungsgegenstand beispielsweise dargestellt. Es zeigen

Fig. 1 einen Querschnitt durch ein erfindungsgemäßes Gleitlager in einem vergrößerten Maßstab,

Fig. 2 eine Draufsicht auf die Abwicklung der Lauffläche des Gleitlagers nach Fig. 1,

Fig. 3 eine schematische Darstellung eines erfindungsgemäßen Radiallagers ausschnittsweise in einem Axialschnitt und die

Fig. 4 bis 6 verschiedene Querschnittsformen von nutenartigen Ausnehmungen der Lauffläche in einem größeren Maßstab.

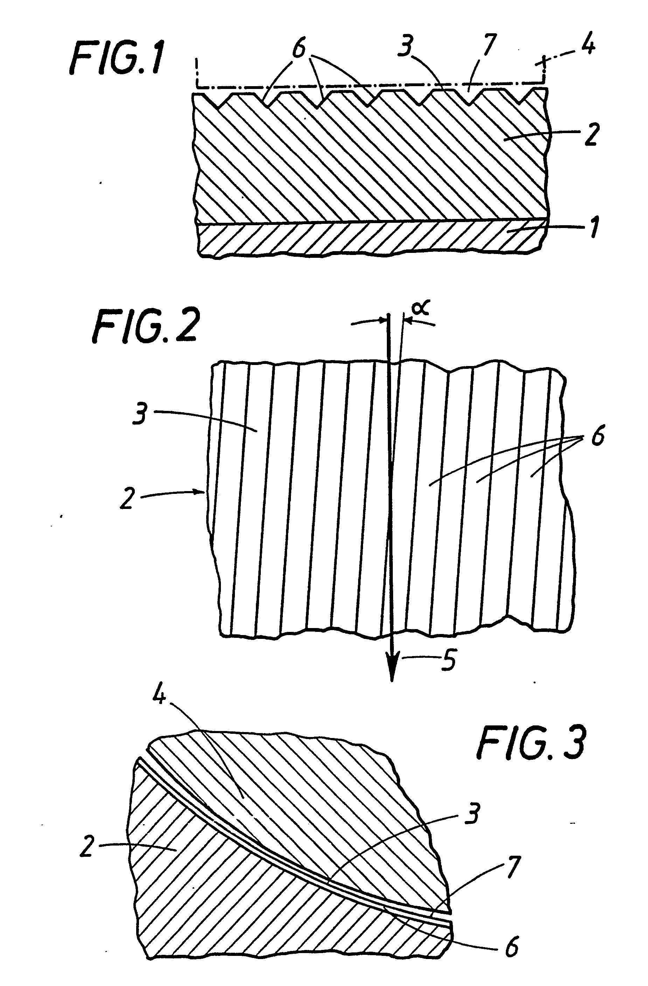

Gemäß den Fig. 1 und 2 besteht das dargestellte hydrodynamische Gleitlager aus einer stählernen Stützschale 1, auf der eine Lagermetallschicht 2, beispielsweise auf einer Aluminiumbasis od.dgl., aufgebracht ist. Diese Lagermetallschicht 2 bildet eine Lauffläche 3 für einen strichpunktiert angedeuteten, bewegten Lagerteil 4, der in Richtung des in Fig. 2 eingezeichneten Pfeiles 5 über die Lauffläche 3 angetrieben wird. Zum Unterschied zu üblichen Gleitlagern dieser Art ist die Lauffläche 3 nicht durchgehend glatt ausgebildet, sondern weist nutenartige Ausnehmungen 6 auf, die gegenüber der Laufrichtung 5 einen Neigungswinkel $\alpha$ von höchstens 20° einnehmen. Die nutenartigen Ausnehmungen 6 können folglich von einer oder mehreren durchgehenden Nuten gebildet werden, was für die Herstellung Vorteile mit sich bringt. Es ist aber auch ohne weiteres möglich, die Ausnehmungen 6 als in sich geschlossene Ringe auszubilden, die in ihrem Verlauf nicht von der Laufrichtung 5 abweichen, so daß $\alpha = 0°$ gilt. Vorzugsweise liegt $\alpha$ zwischen 0° und 5°.

Um die erfindungsgemäße Wirkung sicherzustellen, ist nicht nur ein maximaler Winkel $\alpha$ vorzugeben, sondern auch sicherzustellen, daß in den Kanälen 7 zwischen den nutenartigen Ausnehmungen 6 und dem bewegten Lagerteil 4 ein hydrodynamischer Mindestdruck durch das Schmiermittel aufgebaut werden kann, was die Querschnittsgröße der nutenartigen Ausnehmungen 6 in der Lauffläche 3 nach oben begrenzt. Trotz der wegen des Vorsehens der nutenartigen Ausnehmungen 6 beeinträchtigten hydrodynamischen Tragfähigkeit der Schmiermittelschicht zwischen der Lauffläche 3 und dem bewegten Lagerteil 4 können bei solchen Gleitlagern günstigere Reibungsverhältnisse sichergestellt werden, weil mit der möglichen größeren Schmiermittelförderung durch die nutenartigen Ausnehmungen 6 eine vorteilhafte Wärmeabfuhr ermöglicht werden kann, die einen Temperaturanstieg auch innerhalb von örtlichen Bereichen auf einen unzulässig hohen Wert verhindert. Da keine weicheren Lagerwerkstoffe im Bereich der Lauffläche 3 in der Lagermetallschicht 2 eingebettet sind, kann die Verschleißfestigkeit des Lagers auch durch diese weicheren Lagerwerkstoffe nicht beeinträchtigt werden, so daß sich sowohl hinsichtlich der Verschleißfestigkeit als auch hinsichtlich der Reibungsverhältnisse günstige Bedingungen einstellen.

Trotz eines vergleichsweise härteren Lagerwerkstoffes können auch die Einlaufeigenschaften derartiger Lager als gut bezeichnet werden, weil eben im Bereich höherer örtlicher Reibungskräfte die entstehende Wärme besser abgeführt werden kann. Daß die Einlaufbedingungen durch eine Beschichtung der Lauffläche mit einem reibungs- bzw. verschleißmindernden Material verbessert werden können, braucht wohl nicht besonders hervorgehoben zu werden.

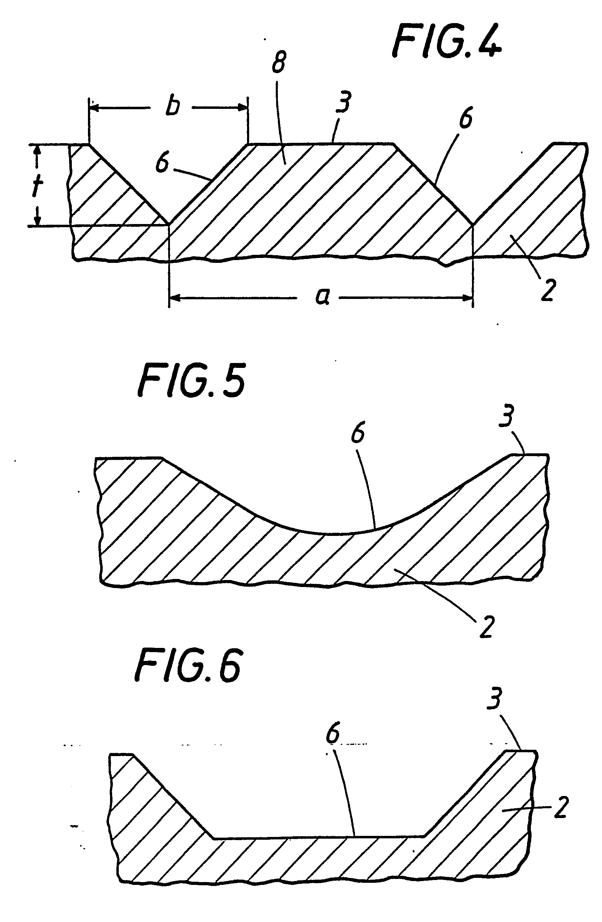

In Fig. 3 sind die sich durch die nutenartigen Ausnehmungen 6 ergebenden Verhältnisse bei einem Radiallager schematisch in einem Axialschnitt angedeutet. Daraus ist zu entnehmen, daß im Bereich des engsten Schmierspaltes durch die Kanäle 7 zwischen dem bewegten Teil 4 und den Ausnehmungen 6 eine größere Schmiermittelmenge gefördert werden kann, was den erwünschten Kühleffekt mit sich bringt.

Da der erfindungsgemäße Effekt von der Möglichkeit der Wärmeabfuhr mit Hilfe des zusätzlich durch die Ausnehmungen 6 förderbaren Schmiermittels abhängt, kommt der Verteilung der nutenartigen Ausnehmungen 6 über die Breite der Lauffläche 3 eine besondere Bedeutung zu. Diese Verteilung kann durch den von Ausnehmungsmitte zu Ausnehmungsmitte gemessenen, axialen Abstand a der nutenartigen Ausnehmungen 6 angegeben werden, wobei durch das Vorgeben eines oberen Grenzwertes für diesen Axialabstand a in Abhängigkeit vom Lagerdurchmesser ausreichende Bedingungen für die Wärmeabfuhr bestimmt werden können.

Wie die Ausführungsbeispiele nach den Fig. 4 bis 6 zeigen, können an sich sehr unterschiedliche Querschnittsformen für die nutenartigen Ausnehmungen 6 in der Lauffläche 3 vorgesehen werden. Wichtig ist, daß das Verhältnis zwischen der Ausnehmungstiefe t und der Breite b der Ausnehmungen der Lauffläche innerhalb bestimmter, ebenfalls vom Durchmesser abhängiger Grenzen liegt, um einerseits die Tragfähigkeit der Lauffläche nicht unzulässig herabzusetzen und anderseits für eine ausreichende Kühlung Sorge zu tragen. In diesem Zusammenhang spielt selbstverständlich auch die Breite der sich zwischen den nutenartigen Ausnehmungen 6 ergebenden Stege 8 eine Rolle, weil ja über diese Stege 8 die Wärme an das durch die Ausnehmungen 6 geförderte Schmiermittel übertragen werden muß. Das Verhältnis zwischen der Stegbreite, die sich aus dem Axialabstand a und der Breite b der nutenartigen Ausnehmungen 6 als (a - b) ergibt, und dem Axialabstand a der Ausnehmungen 6 muß daher ebenfalls nach oben begrenzt sein, damit auch bei ungünstigeren Reibungsverhältnissen eine wärmebedingte Überlastung der Lauffläche in örtlichen Bereichen verhindert werden kann. Die obere Grenze für dieses Verhältnis ist deshalb auch von der Umfangsgeschwindigkeit des bewegten Lagerteiles 4 abhängig.

Da im allgemeinen bei Axiallagern dem hydrodynamischen Druck des Schmiermittels eine geringere Bedeutung als bei Radiallagern zukommt, kann der durch die Kanäle 7 noch zu fördernde Mindestdruck in Abhängigkeit von den spezifischen Verhältnissen der einzelnen Lagerarten unterschiedlich höch gewählt werden, was sich naturgemäß in der Kühlwirkung auswirkt. Durch die geometrischen Abmessungen der nutenartigen Ausnehmungen 6 und deren Verteilung über die Laufflächenbreite lassen sich daher auch hydrodynamische Gleitlager konstruieren, die an besondere Belastungsverhältnisse angepaßt sind.

## Patentansprüche

1. Hydrodynamisches Gleitlager, bestehend aus einer einen bewegten Teil (4) aufnehmenden Lauffläche (3) mit über die Laufflächenbreite verteilten, nutenartigen Ausnehmungen (6), die gegenüber der Laufrichtung (5) höchstens unter einem Winkel ($\alpha$) von 20° geneigt sind, dadurch gekennzeichnet, daß die Ausnehmungen (6) bei einem den Aufbau eines hydrodynamischen Mindestdruckes in den sich mit dem bewegten Teil (4) ergebenden Kanälen (7) für das Schmiermittel ermöglichenden Querschnitt einen von Ausnehmungsmitte zu Ausnehmungsmitte gemessenen Axialabstand (a) voneinander aufweisen, der bis zu einem Höchstwert von 10 mm kleiner oder gleich einem oberen Grenzwert

$$a_o = 200 + 0,5d + 0,006d^2$$

ist, welcher sich beim Einsetzen des jeweiligen in Millimeter gemessenen Lagerdurchmessers d in Mikrometer ergibt, und daß das Verhältnis der Stegbreite (a - b) zwischen zwei Ausnehmungen (6) und dem Axialabstand (a) zwischen den Ausnehmungen (6) kleiner oder gleich einem oberen Grenzwert

$$(a - b)/a = 100 - 6v_u^{0,6} [\%]$$

ist, wobei b die Breite der Ausnehmungen (6) und $v_u$ der in m.s$^{-1}$ gemessene Zahlenwert der Umfangsgeschwindigkeit des bewegten Lagerteiles (4) ist.

2. Hydrodynamisches Gleitlager nach Anspruch 1, dadurch gekennzeichnet, daß der Axialabstand (a) der Ausnehmungen (6) voneinander kleiner als ein oberer Grenzwert

$$a_o = 150 + 0,3d + 0,001d_2$$

ist, der sich beim Einsetzen des in Millimeter gemessenen Lagerdurchmessers d in Mikrometer ergibt.

3. Hydrodynamisches Gleitlager nach Anspruch 1 oder 2, dadurch gekennzeichnet, daß der Axialabstand (a) der Ausnehmungen (6) voneinander größer oder gleich einem unteren Grenzwert

$$a_u = 10 + 0,1d$$

ist, der sich in Mikrometer beim Einsetzen des in Millimeter gemessenen Lagerdurchmessers d ergibt.

4. Hydrodynamisches Gleitlager nach einem der Ansprüche 1 bis 3, dadurch gekennzeichnet, daß das Verhältnis der Ausnehmungstiefe (t) zur Breite (b) der Ausnehmungen (6)

$$t/b = (1500 - d)/1500$$

ist, wobei d dem in Millimeter gemessenen Zahlenwert des Lagerdurchmessers entspricht.

## Claims

1. A hydradynemic sliding surface hearing comprising a sliding surface (3), which is intended to receive a mouving member (4) end comprises groovelike recesses (8), which are distributed over the width of the sliding surface and are inclined from the direction of movement (5) by an angle ($\alpha$) nat in excees of 20°, characterized in that the recesses (8) have a cross-section which permits the minimum hydrodynamic pressure to be built up in the lubricant passages (7) defined hy the recesses and the moving part (4) and the axial spacing (a) of said recesses, measured from the centre of one recess to the centre of another recess, has up to a maximum of 10 mm a value which is smaller than or equal to an upper limit

$$a_o = 200 + 0.5 d + 0.006 d^2$$

in micrometres when d is the hearing diameter measured in millimetres, and that the ratio of the land width (a - h) between two recesses (8) and the axial spacing (a) of the recesses (6) is smaller than or equal to an upper limit

$$(a - b)/a = 100 - 6v_u 0.6 (\%)$$

wherein b is the width of the recesses (6) and $v_u$ is the numerical value, measured in m.s$^{-1}$, of the peripheral velocity of the maving member (4) in the bearing.

2. A hydrodynamic sliding surface bearing according ta claim 1, characterized in that the axial spacing (a) of the recesses (6) is smaller than an upper limit

$$a_o = 150 + 0,3 d + 0,001 d^2$$

in micrometres when d is the bearing diameter measured in millimetres.

3. A hydrodynamic sliding surface hearing according to claim 1 or 2, characterized in that the axial spacing (a) of the recesses (6) is larger than or equal to a lower limit

$$a_u = 10 + 0.1 d$$

in micrometres when d is the bearing diameter measured in millimetres.

4. A hydrodynamic sliding surface bearing according to any of claims 1 to 3, characterized in that the ratio of the depth (t) of the recesses to the width (b) of the recesses (6) equals

$$t/b = (1500 - d)/1500$$

wherein d is the numerical value of the bearing diameter measured in millimetres.

## Claims

1. Palier lisse hydrodynamique formé d'une surface de roulement (3) recevant un élément mobile (4) et munie d'évidements (6) similaires à des rainures, répartis sur la largeur de la surface de roulement, qui sont inclinés relativement à la direction de roulement (5), au maximum d'un angle ($\alpha$) de 20°,

caractérisé par le fait que les évidements (6), avec une section permettant la constitution d'une pression hydrodynamique minimale dans les canaux (7) destinés au lubrifiant et formes par l'élément mobile (4), présentent entre eux un espacement axial (a), mesuré d'un centre d'évidement à un autre centre d évidement, qui, jusqu'à une grandeur maximale de 10 mm, est inférieur ou égal à une grandeur limite supérieure.

$$a_o = 200 + 0,5d + 0,006d^2$$

qui est obtenue en micromètres lorsqu'on introduit le diamètre d du palier dans le cas d'espèce, mesuré en millimètres, et que le rapport de la largeur de filet (a - b) entre deux évidements (6) à l'espacement axial (a) entre les évidements est inférieur ou égal à une grandeur limite supérieure.

$$(a - b)/a = 100 - 6v_u 0,6 \text{ [\%]}$$

$\underline{b}$ étant la largeur des évidements (6) et $v_u$ la valeur numérique, mesurée en m.s$^{-1}$, de la vitesse circonférentielle de l'élément mobile (4) de palier.

2. Palier lisse hydrodynamique selon la revendication 1,

caractérisé par le fait que l'espacement axial (a) des évidements (6) entre eux est inférieur à une grandeur limite supérieure

$$a_o = 150 + 0,3d + 0,001d^2$$

qui est obtenue en micromètres lorsqu'on introduit le diamètre $\underline{d}$ du palier, mesuré en millimètres.

3. Palier lisse hydrodynamique selon l'une des revendications 1 et 2,

caractérisé par le fait que l'espacement axial (a) des évidements (6) entre eux est supérieur ou égal à une grandeur limite inférieure

$$a_u = 10 + 0,1d$$

qui est obtenue en micromètres lorsqu'on introduit le diamètre $\underline{d}$ du palier, mesuré en millimètres.

4. Palier lisse hydrodynamique selon les revendications 1 à 3,

caractérisé par le fait que le rapport de la profondeur d'évidement (t) à la largeur (b) des évidements (6) est

$$t/b = (1500 - d)/1500,$$

$\underline{d}$ correspondant à la valeur numérique du diamètre de palier, mesurée en millimètres.

**FIG.1**

**FIG.2**

**FIG.3**

FIG.4

FIG.5

FIG.6